(19) **Europäisches Patentamt**

**European Patent Office**

**Office européen des brevets**

(11) **EP 1 312 523 A1**

(12) **EUROPÄISCHE PATENTANMELDUNG**

(43) Veröffentlichungstag:
 21.05.2003 Patentblatt 2003/21

(51) Int Cl.$^{7}$: **B60T 8/00**, B60T 17/22

(21) Anmeldenummer: 02022436.6

(22) Anmeldetag: 04.10.2002

(84) Benannte Vertragsstaaten:
 **AT BE BG CH CY CZ DE DK EE ES FI FR GB GR IE IT LI LU MC NL PT SE SK TR**
 Benannte Erstreckungsstaaten:
 **AL LT LV MK RO SI**

(30) Priorität: **17.11.2001 DE 10156607**

(71) Anmelder: **WABCO GmbH & Co. OHG**
 **30432 Hannover (DE)**

(72) Erfinder: **Eckert, Horst**
 **31547 Rehburg-Loccum (DE)**

(74) Vertreter: **Schrödter, Manfred**
 **WABCO GmbH & Co. OHG,**
 **Postfach 91 12 62**
 **30432 Hannover (DE)**

(54) **Verfahren und Vorrichtung zur Überwachung von Bremsvorgängen eines Kraftfahrzeuges**

(57) Die Erfindung bezieht sich auf Verfahren zur Überwachung von Bremsvorgängen eines Kraftfahrzeuges, bei dem bei dem eine Fahrzeug-Grundbeschleunigung ($a_{GRUND}$) ermittelt wird, eine Ist-Beschleunigung ($a_{IST}$) gemessen wird, eine zusätzlich zu der Fahrzeug-Grundbeschleunigung ($a_{GRUND}$) wirkende Soll-Bremsbeschleunigung ($a_{SOLL}$) aus einer vom Fahrer eingegebenen Bremsbetätigung ermittelt wird, ein aktueller Korrekturfaktor ($k_{N}$) aus der Fahrzeug-Grundbeschleunigung ($a_{GRUND}$), der Soll-Beschleunigung ($a_{SOLL}$) und der Ist-Beschleunigung ($a_{IST}$) gebildet wird, der aktuelle Korrekturfaktor ($k_{N}$) in einem Relativ-Vergleich mit einem aus mehreren vorherigen Bremsvorgängen ermittelten durchschnittlichen Korrekturfaktor ($k_{D}$) verglichen wird, und auf Grundlage des Relativ-Vergleiches entschieden wird, ob ein ordnungsgemäßer Bremsvorgang vorliegt.

**Beschreibung**

Die Erfindung bezieht sich auf ein Verfahren zur Überwachung von Bremsvorgängen, eine Vorrichtung zur Durchführung eines derartigen Verfahrens, ein Verfahren zur Bremsdrucksteuerung unter Verwendung eines derartigen Verfahrens sowie eine Bremsanlage eines Kraftfahrzeuges mit einer Bremsdrucksteuerung unter Verwendung dieses Verfahrens.

Verfahren zur Überwachung von Bremsvorgängen werden zum einen für die Ausgabe eines Warnsignals an den Fahrer, insbesondere bei Nachlassen der Bremswirkung durch Überhitzung bei längerer Bremsbetätigung, und zum anderen für Bremsregelverfahren, insbesondere Verzögerungsregelungen, verwendet, bei denen der aktuelle Bremsenzustand berücksichtigt wird.

Hierbei werden im allgemeinen vom Fahrer auf die Fahrzeugbremse ausgeübte Stellgrößen und Betriebsdaten des Fahrzeuges in geeigneter Weise miteinander verglichen, um ein Abweichen des Fahrerwunsches von dem tatsächlichen Bremsverhalten zu ermitteln. Die DE 35 02 825 A1 zeigt eine Überlast-Schutz- und/oder -Warneinrichtung, bei der aus einer auf eine Betätigungseinrichtung der Fahrzeugbremse einwirkenden Stellgröße und aus Betriebsdaten des Fahrzeuges und/oder Auslegungsdaten der Bremse und der Zuspanneinrichtung ein Rechnungs-Bremsdruck ermittelt und mit einem Ist-Bremsdruck verglichen wird. Hierbei wird ein Warnsignal ausgegeben, wenn der Ist-Bremsdruck um einen vorbestimmten Wert vom Rechnungs-Bremsdruck abweicht. Alternativ hierzu kann ein Warnsignal ausgegeben werden, wenn die von dem anstehenden Bremsdruck erzeugte Ist-Bremskraft um einen vorbestimmten Wert von einer aus dem Bremsdruck und den Ausführungsdaten der Bremse und der Zuspanneinrichtung bestimmten Rechnungs-Bremskraft abweicht. Durch einen derartigen Vergleich theoretischer und tatsächlicher Werte des Bremsdruckes bzw. der Bremskraft kann bereits ein Fehlverhalten der Bremsen in vielen Fällen ermittelt werden.

Bei Verwendung eines zu hohen Vergleichswertes kann hierbei der Fahrer eventuell bei einem Bremsversagen durch allmähliches Überhitzen erst zu spät gewarnt werden, so daß er sein Fahrverhalten nicht mehr rechtzeitig ändern kann. Für eine sichere und hinreichend schnelle Ermittlung eines fehlerhaften Verhaltens der Bremsanlage muß somit ein relativ niedriger Vergleichswert gewählt werden, so daß der Fahrer gegebenenfalls rechtzeitig gewarnt wird und sein Fahrverhalten z. B. durch Beendigung der Fahrt oder Verwendung einer Motorbremse ändern kann. Bei dem Vergleich von Sollwerten und Istwerten des Bremsdruckes bzw. der Bremskraft können jedoch die jeweiligen Fahrverhältnisse, z. B. Ladung des Fahrzeuges, eventuelle Verwendung eines Anhängers, Geländegegebenheiten usw. nicht berücksichtigt werden. Es wird vielmehr jede Bremsung für sich allein bzw. isoliert betrachtet. Bei Verwendung eines hinreichend niedrigen Vergleichswertes kann somit eventuell unberechtigt ein Bremsversagen festgestellt werden oder auch ein häufiges, vom Fahrer als nervös gewertetes Ein- und Ausschalten der Warneinrichtung erfolgen. Eine dieses Warnsignal verwendende Verzögerungsregelung und somit das Fahrverhalten des Fahrzeuges können hierdurch ungünstig beeinflußt werden.

Der Erfindung liegt die Aufgabe zugrunde, ein Verfahren zur Überwachung von Bremsvorgängen, eine Vorrichtung zur Durchführung eines derartigen Verfahrens, ein Verfahren zur Bremsdrucksteuerung unter Verwendung eines derartigen Überwachungsverfahrens sowie eine Bremsanlage zu schaffen, die eine sichere, genaue und vorteilhafterweise schnelle Erkennung eines fehlerhaften Bremsverhaltens ermöglichen. Dies soll vorteilhafterweise mit relativ geringem zusätzlichen apparativen Aufwand erfolgen.

Diese Aufgabe wird gelöst durch ein Verfahren zum Überwachen eines Bremsvorganges nach Anspruch 1, ein Verfahren zur Bremsdrucksteuerung nach Anspruch 22, eine Vorrichtung zur Durchführung des Überwachungsverfahrens nach Anspruch 24 sowie eine Bremsanlage nach Anspruch 29.

Erfindungsgemäß wird somit - wie bei herkömmlichen Verfahren - ein Soll-Ist-Vergleich zum Erkennen des Nachlassens einer Bremswirkung durchgeführt. Erfindungsgemäß wird bei diesem Vergleich jedoch - anders als bei herkömmlichen Verfahren - ein aktuell ermittelter Wert mit einem Durchschnittswert vorhergehender Messungen verglichen. Dieser Durchschnittswert spiegelt somit den aktuellen Zustand der Bremsen bzw. der Bremsanlage wieder. Somit kann - z. B. durch einen geeigneten Vorfaktor - ein hinreichend niedriger relativer Vergleichswert gewählt werden, der bereits bei einem relativ geringen Nachlassen der Bremswirkung mit hoher Sicherheit ein fehlerhaftes Bremsverhalten erkennt.

Als ordnungsgemäße Bremsvorgänge zur Ermittlung des durchschnittlichen Korrekturfaktors können einige Auswahlkriterien festgelegt werden, wie z. B., daß keine Antiblokkierregelung (mit zeitweiser Sperrung des Bremsdruckes durch z. B. Ventile) vorgenommen wurde, eine Mindestgeschwindigkeit des Fahrzeuges vorlag (um statische Bremsvorgänge auszuschließen), ein hinreichender Bremsdruck zur Beeinflussung des Fahrverhaltens vorgelegen hat und seit der letzten Bremsung eine Mindestzeit vergangen ist, die für die Ermittlung einer neuen Fahrzeug-Grundbeschleunigung ausreichend ist. Ergänzend oder alternativ hierzu können auch weitere Ausschlußkriterien festgelegt werden.

Beim Soll-/Ist-Vergleich zum Erkennen des Nachlassens einer Bremswirkung wird die Fahrzeug-Grundbeschleunigung mit einbezogen. Die Fahrzeug-Grundbeschleunigung ist hierbei die Beschleunigung, der das Fahrzeug zum Zeitpunkt des Wirkungsbeginns der Bremsen unterliegt. Diese Grundbeschleunigung wird vorteilhafterweise genau zu diesem Zeitpunkt erfaßt und abgespeichert.

In einer ersten Ausführungsform des Soll-/Ist-Vergleichs wird diese Fahrzeug-Grundbeschleunigung dem Sollwert der Beschleunigung zugeordnet:

$$k_N = (a_{SOLL} + a_{GRUND}) / a_{IST},$$

wobei

$k_N$ = Korrekturfaktor
$a_{GRUND}$ = Fahrzeug-Grundbeschleunigung,
$a_{SOLL}$ = vom Fahrer vorgegebene Soll-Beschleunigung,
$a_{IST}$ = Ist-Beschleunigung.

In einer zweiten, bevorzugten Ausführungsform wird die Fahrzeug-Grundbeschleunigung von dem Istwert $a_{IST}$ des Soll-/Ist-Vergleichs abgezogen, so daß sich der Korrekturfaktor wie folgt ergibt:

$$k_N = a_{SOLL} / (a_{IST} - a_{GRUND}).$$

Die Werte von $a_{GRUND}$ und $a_{IST}$ dieser beiden Formeln können - falls am Fahrzeug vorhanden - direkt durch einen Längsbeschleunigungssensor oder indirekt mittels der ABS-Radsenso-ren ermittelt werden. Hierbei kann $a_{GRUND}$ auch negativ sein, so daß eine Fahrzeug-Grundverzögerung vorliegt. Eine Ermittlung der Fahrzeuglängsbeschleunigung mittels der ABS-Sensoren ist dem Fachmann aus Antiblockierregelungen bekannt, so daß hierauf nicht weiter eingegangen wird. Der Wert des $a_{SOLL}$ kann insbesondere aus dem Ausgangssignal des Bremswertgebers, d. h. dem Bremswertsignal, ermittelt werden.

Falls im Verlauf einer aktuellen Bremsung ein Fading durch Bremsüberhitzung auftritt, erhöht sich automatisch durch den permanent durchgeführten Soll-/Ist-Vergleich auch der Wert des Korrekturfaktors. Das erfindungsgemäße Verfahren erlaubt somit ein Erkennen eines Fadings sowohl bei einer Bremsanlage in sehr gutem Zustand als auch bei einer in etwas schlechterem Zustand befindlichen Bremsanlage unabhängig von der Fahrsituation, d. h. Gefälle/Steigung, Beladungsgrad etc. Insbesondere kann auch bei einer sehr guten Bremsanlage, die besser ist als es einem Korrekturfaktor mit dem Wert 1,0 entspricht, durch den Relativ-Vergleich ein beginnendes Fading schnell erkannt werden.

Die erfindungsgemäße Vorrichtung zur Durchführung des Verfahrens weist dementsprechend eine erste Recheneinrichtung zum Berechnen des aktuellen Korrekturfaktors nach einem der beiden oben erläuterten Ausführungsformen, eine Speichereinrichtung zum Speichern einer vorgegebenen Anzahl von Korrekturfaktoren vorheriger Bremsvorgänge, eine zweite Recheneinrichtung zum Berechnen des durchschnittlichen Korrekturfaktors aus den Korrekturfaktoren vorheriger Bremsvorgänge, und eine erste Auswerteeinrichtung zum Vergleichen des aktuellen Korrekturfaktors mit dem durchschnittlichen Korrekturfaktor und Ausgeben eines Warnsignals in Abhängigkeit von diesem Vergleich auf. Hierzu kann insbesondere eine dynamische Speichereinrichtung zum Speichern der Anzahl von Korrekturfaktoren vorheriger, als ordnungsgemäß erkannter Bremsvorgänge verwirklicht werden. Somit ist der zusätzliche apparative Aufwand gegenüber herkömmlichen Systemen gering, bei denen ein Vergleich eines Bremsdruckes oder einer Bremskraft mit einem Absolutwert vorgenommen wird.

Erfindungsgemäß kann vorteilhafterweise zusätzlich zu dem Relativ-Vergleich auch ein Absolut-Vergleich des aktuellen Korrekturfaktors mit einem Absolut-Vergleichswert durchgeführt werden. Falls die Bremsanlage in einem derartig schlechten Zustand ist, daß sich permanent ein sehr hoher Korrekturfaktor ergibt, der den Absolut-Vergleichswert übersteigt, wird der Fahrer somit permanent gewarnt.

Erfindungsgemäß kann das Überwachungsverfahren insbesondere bei einer Bremsdrucksteuerung bzw. Verzögerungsregelung verwendet werden. Bei dem erfindungsgemäßen Verfahren zur Bremsdrucksteuerung werden die Bremsvorgänge mit einem erfindungsgemäßen Überwachungsverfahren überwacht, wobei der hierbei ermittelte aktuelle Korrekturfaktor als Eingangsgröße für ein Verzögerungsregelverfahren, insbesondere unter Betätigung von Antiblokkiersystem-Ventilen, verwendet wird. Indem die Verzögerungsregelung nur bis zu dem Relativ-Vergleichswert, d. h. dem Produkt des durchschnittlichen Korrekturfaktors mit dem Vorfaktor, wirksam ist, bemerkt der Fahrer durch ein plötzliches Nachlassen der Bremswirkung seines Fahrzeuges direkt das Versagen bzw. das beginnende Versagen der Bremsanlage. Ein derartiges plötzliches Nachlassen der Bremswirkung vermittelt hierbei einem Fahrer subjektiv dieses Nachlassen besser als ein im Laufe der Zeit bzw. mit steigendem Bremsdruck allmählich einsetzendes Nachlassen. Obwohl somit das Fahrzeug mittels einer Verzögerungsregelung grundsätzlich sicher gesteuert wird, kann dem Fahrer - zusätzlich zu den vorhandenen Warneinrichtungen - direkt der nicht ordnungsgemäße Zustand der Bremsanlage vermittelt werden.

Die erfindungsgemäße Vorrichtung weist für diesen Absolutvergleich eine zweite Auswerteeinrichtung zum Vergleichen des aktuellen Korrekturfaktors mit dem Absolutvergleichswert auf.

Die Verwendung eines Korrekturfaktors ermöglicht auch eine quantitative Anzeige der Fehlerhaftigkeit der Bremsanlage, z. B. über die Blinkfrequenz der Warneinrichtungen bzw. Sicherheitslampen im Kombi-Instrument des Fahrzeuges in Abhängigkeit von dem Abstand des aktuellen Korrekturfaktors von dem Relativ-Vergleichswert.

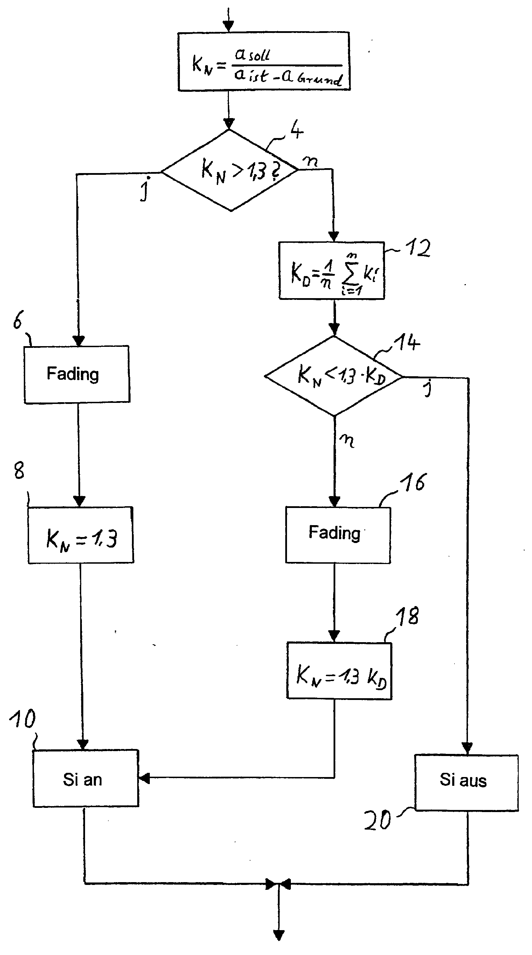

Die Erfindung wird im folgenden anhand der beiliegenden Zeichnung an einer Ausführungsform näher erläutert.

Die Figur zeigt ein Flußdiagramm eines erfindungsgemäßen Überwachungsverfahrens gemäß einer Ausführungsform der Erfindung.

Gemäß der Figur wird entsprechend der oben erläuterten bevorzugten Ausführungsform in einem Verfahrensschritt 2 ein aktueller Korrekturfaktor $k_N$ ermittelt als Quotient einer Soll-Beschleunigung $a_{SOLL}$ und der Differenz einer Ist-Beschleunigung $a_{IST}$ und einer Fahrzeug-Grundbeschleunigung ($a_{GRUND}$). Die Ist-Beschleunigung $a_{IST}$ kann unter Zuhilfenahme eines für eine Fahrdynamikregelung verwendeten Längsbeschleunigungssensors direkt ermittelt werden oder über ABS-Sensoren, z. B. durch zeitliche Ableitung der für die ABS-Regelung verwendeten Referenzgeschwindigkeit. Die Soll-Beschleunigung $a_{SOLL}$ wird ermittelt, indem das Signal eines Bremswertgebers des Kraftfahrzeuges als vom Fahrer zusätzlich zu der Fahrzeug-Grundbeschleunigung gewünschten Beschleunigung gewertet wird.

Der so ermittelte aktuelle Korrekturfaktor $k_N$ wird gemäß dem Entscheidungsschritt 4 mit einem Absolut-Vergleichswert verglichen, der hier auf 1,3 angesetzt ist und allgemein im Bereich von 1 bis 1,6, vorzugsweise 1,1 bis 1,5 liegt. Falls der aktuelle Korrekturfaktor $k_N$ größer als dieser Wert ist, wird gemäß der linken Verzweigung in einem Entscheidungsschritt 6 festgestellt, daß ein Nachlassen der Bremswirkung durch Fading vorliegt und nachfolgend in Verfahrensschritt 8 der aktuelle Korrekturfaktor $k_N$ für die weitere Verzögerungsregelung auf 1,3 gesetzt, um dem die Bremse betätigenden Fahrer zu vermitteln, daß trotz weiterer Bremsbetätigung keine stärkere Bremswirkung einsetzt und somit ein Fading vorliegt. Weiterhin wird ein Warnsignal in Verfahrensschritt 10 an die Sicherheitslampen ausgegeben, damit diese das Bremsversagen bzw. Bremsfehlverhalten dem Fahrer melden.

Falls in dem Entscheidungsschritt 4 festgestellt wird, daß der aktuelle Korrekturfaktor $k_N$ kleiner oder gleich dem Absolut-Vergleichswert von 1,3 ist, wird im Verfahrensschritt 12 zunächst ein durchschnittlicher Korrekturfaktor $k_D$ als arithmetisches Mittel der letzten n - vorzugsweise acht bis sechzehn - Korrekturfaktoren $k_I$ der als relevant ermittelten Bremsvorgänge ermittelt. Hierbei können als relevante Bremsvorgänge z. B. Bremsvorgänge mit einem Bremswert innerhalb eines vorgegebenen Bereiches, vorzugsweise größer/gleich 3 % und kleiner 80 % eines maximalen Bremswertes, verwendet werden. Weiterhin kann als Bedingung für relevante Bremsvorgänge ein Mindest-Soll-Bremsdruck genommen werden, vorzugsweise ein Mindest-Vorderachsen-Soll-Bremsdruck von z. B. 0,8 bar nach einer Bremskraftverteilung. Anschließend wird im Entscheidungsschritt 14 der aktuelle Korrekturfaktor mit einem Relativ-Vergleichswert verglichen, der als Produkt aus dem im vorherigen Schritt ermittelten durchschnittlichen Korrekturfaktor $k_D$ und einem Vorfaktor gebildet, der hier auf 1,3 gesetzt ist und im allgemeinen 1 bis 1,6, vorzugsweise 1,1 bis 1,5 beträgt. Falls der aktuelle Korrekturfaktor diese Bedingung erfüllt, liegt ein ordnungsgemäßes Bremsverhalten vor, so daß gemäß der rechten Verzweigung in Verfahrensschritt 20 entschieden wird, daß kein Warnsignal an die Sicherheitslampen ausgegeben wird. Falls die Bedingung des Entscheidungsschrittes 14 nicht erfüllt ist, wird in Schritt 16 auf ein Fading erkannt und in Schritt 18 - analog dem Schritt 8 - wiederum der aktuelle Korrekturfaktor $k_N$ für die weitere Verzögerungsregelung des elektrischen Bremssystemes auf den o. g. Relativ-Vergleichswert von 1,3 x $k_D$ gesetzt, so daß die Verzögerungsregelung trotz des Fahrerwunsches nicht weiter erhöht wird. Weiterhin wird in Schritt 10 wiederum ein Warnsignal an die Sicherheitslampen ausgegeben, um den Fahrer zu warnen.

In diesem schematischen Verfahrensablauf können einige Ergänzungen und Modifikationen vorgenommen werden; z. B. kann in Schritt 10 eine Blinkfrequenz der Sicherheitslampen in Abhängigkeit von dem in Schritt 4 bzw. Schritt 14 festgestellten Unterschied des aktuellen Korrekturfaktors $k_N$ gegenüber dem Relativ-Vergleichswert bzw. Absolut-Vergleichswert vorgenommen werden. Hierbei kann z. B. die Blinkfrequenz erhöht werden, wenn die Abweichung des aktuellen Korrekturfaktors $k_N$ von dem Relativ-Vergleichswert bzw. Absolut-Vergleichswert steigt.

Weiterhin kann alternativ zu dem gezeigten Ablauf der Schritt 12 vor den Entscheidungsschritt 4 oder den Schritt 2 gezogen werden. Falls der Schritt 12 vor dem Schritt 2 durchgeführt wird, kann auf vorteilhafte Weise bei der Ermittlung des aktuellen Korrekturfaktors $k_N$ in Schritt 2 der Zuwachs des aktuellen Korrekturfaktors $k_N$ gegenüber dem durchschnittlichen Korrekturfaktor $k_D$ begrenzt werden. Dies kann insbesondere bei den ersten Berechnungen einer neuen Bremsung vorgenommen werden, um in dieser Anfangsphase der Bremsung ein nervöses Springen des aktuellen Korrekturfaktors $k_N$ zu verhindern.

In Schritt 12 können als relevante vorherige Bremsvorgänge insbesondere derartige Bremsvorgänge herangezogen werden, bei denen keine Antiblockier-Regelung vorgenommen wurde, ein Mindest-Bremsdruck erreicht wurde und seit dem vorherigen Bremsvorgang eine Mindestzeit verstrichen ist.

**Patentansprüche**

1. Verfahren zur Überwachung von Bremsvorgängen eines Kraftfahrzeuges, bei dem
   eine Fahrzeug-Grundbeschleunigung ($a_{GRUND}$) ermittelt wird,
   eine Ist-Beschleunigung ($a_{IST}$) gemessen wird,
   eine zusätzlich zu der Fahrzeug-Grundbeschleunigung ($a_{GRUND}$) wirkende Soll-Bremsbeschleunigung ($a_{SOLL}$) aus einer vom Fahrer eingegebenen Bremsbetätigung ermittelt wird,

ein aktueller Korrekturfaktor ($k_N$) aus der Fahrzeug-Grundbeschleunigung ($a_{GRUND}$), der Soll-Beschleunigung ($a_{SOLL}$) und der Ist-Beschleunigung ($a_{IST}$) gebildet wird, der aktuelle Korrekturfaktor ($k_N$) in einem Relativvergleich mit einem aus mehreren vorherigen Bremsvorgängen ermittelten durchschnittlichen Korrekturfaktor ($k_D$) verglichen wird, und

auf Grundlage des Relativ-Vergleiches entschieden wird, ob ein ordnungsgemäßer Bremsvorgang vorliegt.

2.  Verfahren nach Anspruch 1, **dadurch gekennzeichnet, daß** der Korrekturfaktor aus einem Verhältnis der Soll-Beschleunigung ($a_{SOLL}$) zu einer Differenz der Ist-Beschleunigung ($a_{IST}$) und der Fahrzeug-Grundbeschleunigung ($a_{GRUND}$) gebildet wird.

3.  Verfahren nach Anspruch 1, **dadurch gekennzeichnet, daß** der Korrekturfaktor aus einem Verhältnis einer Summe der Soll-Beschleunigung ($a_{SOLL}$) und der Fahrzeug-Grundbeschleunigung ($a_{GRUND}$) zu der Ist-Beschleunigung ($a_{IST}$) gebildet wird.

4.  Verfahren nach einem der vorherigen Ansprüche, **dadurch gekennzeichnet, daß** die Ist-Beschleunigung ($a_{IST}$) aus Ausgangssignalen eines Längsbeschleunigungssensors oder von ABS-Sensoren des Kraftfahrzeuges ermittelt wird.

5.  Verfahren nach einem der vorherigen Ansprüche, **dadurch gekennzeichnet, daß** die vom Fahrer eingegebene Bremsbetätigung aus einem Ausgangssignal eines Bremswertgebers oder eines Bremsdruckmessers ermittelt wird.

6.  Verfahren nach einem der vorherigen Ansprüche, **dadurch gekennzeichnet, daß** ein Relativ-Vergleichswert ($1{,}3\,k_D$) als Produkt des durchschnittlichen Korrekturfaktors ($k_D$) und eines Vorfaktors ($1{,}3$) berechnet wird und bei dem Relativ-Vergleich ermittelt wird, ob der aktuelle Korrekturfaktor ($k_N$) den Relativ-Vergleichswert überschreitet, wobei in dem Fall, daß der aktuelle Korrekturfaktor ($k_N$) den Vergleichswert ($1{,}3\,k_D$) überschreitet, auf ein Nachlassen der Bremswirkung erkannt wird.

7.  Verfahren nach Anspruch 6, **dadurch gekennzeichnet, daß** der Vorfaktor 1 bis 1,6, vorzugsweise 1,1 bis 1,5, z. B. 1,3 beträgt.

8.  Verfahren nach Anspruch 6 oder 7, **dadurch gekennzeichnet, daß** bei Erkennen des Nachlassens der Bremswirkung ein Warnsignal ausgegeben wird, vorzugsweise als Blinksignal an Warnlampen eines Kombi-Instrumentes des Kraftfahrzeuges.

9.  Verfahren nach Anspruch 8, **dadurch gekennzeichnet, daß** eine Blinkfrequenz des Blinksignals abhängig ist von dem Abstand des Korrekturfaktors von dem Vergleichswert.

10. Verfahren nach einem der vorherigen Ansprüche, **dadurch gekennzeichnet, daß** der durchschnittliche Korrekturfaktor ($k_D$) als Mittelwert einer Anzahl von als relevant erkannten Bremsvorgängen gebildet wird.

11. Verfahren nach Anspruch 10, **dadurch gekennzeichnet, daß** als relevante Bremsvorgänge nur Bremsvorgänge ohne Antiblockierregelung verwendet werden.

12. Verfahren nach Anspruch 10 oder 11, **dadurch gekennzeichnet, daß** als relevante Bremsvorgänge nur Bremsvorgänge mit einem Bremswert innerhalb eines vorgegebenen Bereiches, vorzugsweise größer/gleich 3 % und kleiner 80 % eines maximalen Bremswertes, verwendet werden.

13. Verfahren nach einem der Ansprüche 10-12, **dadurch gekennzeichnet, daß** als relevante Bremsvorgänge nur Bremsvorgänge mit einem Mindest-Soll-Bremsdruck, vorzugsweise mit einem Mindest-Vorderachsen-Soll-Bremsdruck von z. B. 0,8 bar nach einer Bremskraftverteilung, verwendet werden.

14. Verfahren nach einem der Ansprüche 10-13, **dadurch gekennzeichnet, daß** als relevante Bremsvorgänge nur Bremsvorgänge verwendet werden, bei denen seit dem vorherigen Bremsvorgang eine Mindestzeit vergangen ist.

15. Verfahren nach einem der Ansprüche 10-14, **dadurch gekennzeichnet, daß** als relevante Bremsvorgänge nur als ordnungsgemäß erkannte Bremsvorgänge verwendet werden.

16. Verfahren nach einem der Ansprüche 10-15, **dadurch gekennzeichnet, daß** der durchschnittliche Korrekturfaktor ($k_D$) nach jedem als relevant bewerteten Bremsvorgang neu ermittelt wird.

17. Verfahren nach einem der Ansprüche 10-16, **dadurch gekennzeichnet, daß** in einer Anfangsphase eines neuen Bremsvorganges bei der Ermittlung des aktuellen Korrekturfaktors ($k_N$) der Zuwachs des aktuellen Korrekturfaktors ($k_N$) gegenüber dem durchschnittlichen Korrekturfaktor ($k_D$) begrenzt wird.

18. Verfahren nach einem der vorherigen Ansprüche, **dadurch gekennzeichnet, daß** zusätzlich zu dem Relativ-Vergleich des aktuellen Korrekturfaktors ($k_N$) mit dem durchschnittlichen Korrekturfaktor ($k_D$) ein Absolut-Vergleich des aktuellen Korrekturfaktors ($k_N$) mit einem Absolut-Vergleichswert durchgeführt wird und aus dem Absolut-Vergleich ermittelt wird, ob ein ordnungsgemäßer Bremsvorgang vorliegt.

19. Verfahren nach Anspruch 18, **dadurch gekennzeichnet, daß** der Absolut-Vergleich vor dem Relativ-Vergleich durchgeführt wird.

20. Verfahren nach Anspruch 18 oder 19, **dadurch gekennzeichnet, daß** bei dem Absolut-Vergleich der aktuelle Korrekturfaktor ($k_N$) mit einem Absolut-Vergleichswert im Bereich von 1 bis 1,6, vorzugsweise 1,1 bis 1,5, z. B. 1,3 verglichen wird.

21. Verfahren nach einem der Ansprüche 18-20, **dadurch gekennzeichnet, daß** in dem Fall, daß der aktuelle Korrekturfaktor ($k_N$) den Absolut-Vergleichswert überschreitet, auf ein Nachlassen der Bremswirkung, insbesondere auf ein Fading, erkannt wird.

22. Verfahren zur Bremsdrucksteuerung, bei dem die Bremsvorgänge mit einem Verfahren nach einem der vorherigen Ansprüche überwacht werden und der hierbei ermittelte aktuelle Korrekturfaktor als Eingangsgröße für ein Verzögerungsregelverfahren, insbesondere unter Betätigung von Antiblokkiersystem-Ventilen, verwendet wird.

23. Verfahren nach Anspruch 22, **dadurch gekennzeichnet, daß** in dem Fall, daß in dem Relativ-Vergleich oder Absolut-Vergleich ein fehlerhaftes Bremsverhalten ermittelt wird, eine Ausregelung des Bremsverhaltens begrenzt wird, vorzugsweise durch Verwendung des Relativ-Vergleichswertes bzw. Absolut-Vergleichswertes anstelle des aktuellen Korrekturfaktors für die Verzögerungsregelung.

24. Vorrichtung zur Durchführung eines Verfahrens nach einem der Ansprüche 1-21, mit einer ersten Recheneinrichtung zum Berechnen eines aktuellen Korrekturfaktors ($k_N$) aus einer Fahrzeug-Grundbeschleunigung ($a_{GRUND}$), einer Soll-Beschleunigung ($a_{SOLL}$) und einer Ist-Beschleunigung ($a_{IST}$), einer Speichereinrichtung zum Speichern einer vorgegebenen Anzahl von Korrekturfaktoren vorheriger Bremsvorgänge, einer zweiten Recheneinrichtung zum Berechnen eines durchschnittlichen Korrekturfaktors ($k_D$) aus den Korrekturfaktoren vorheriger Bremsvorgänge, und einer ersten Auswerteeinrichtung zum Vergleichen des aktuellen Korrekturfaktors ($k_N$) mit dem durchschnittlichen Korrekturfaktor ($k_D$) und Ausgeben eines Warnsignals in Abhängigkeit von diesem Vergleich.

25. Vorrichtung nach Anspruch 24, **dadurch gekennzeichnet, daß** der Korrekturfaktor aus einem Verhältnis der Soll-Beschleunigung ($a_{SOLL}$) zu einer Differenz der Ist-Beschleunigung ($a_{IST}$) und der Fahrzeug-Grundbeschleunigung ($a_{GRUND}$) gebildet wird.

26. Vorrichtung nach Anspruch 24, **dadurch gekennzeichnet, daß** der Korrekturfaktor aus einem Verhältnis einer Summe der Soll-Beschleunigung ($a_{SOLL}$) und der Fahrzeug-Grundbeschleunigung ($a_{GRUND}$) zu der Ist-Beschleunigung ($a_{IST}$) gebildet wird.

27. Vorrichtung nach einem der Ansprüche 24-26, **dadurch gekennzeichnet, daß** die erste Auswerteeinrichtung vergleicht, ob der aktuelle Korrekturfaktor ($k_N$) größer als ein Produkt des durchschnittlichen Korrekturfaktors ($k_D$) mit einem Vorfaktor ist und in dem Fall, daß der aktuelle Korrekturfaktor ($k_N$) größer ist, das Warnsignal ausgibt.

28. Vorrichtung einem der Ansprüche 24-27, **dadurch gekennzeichnet, daß** eine zweite Auswerteeinrichtung zum Vergleichen des aktuellen Korrekturfaktors ($k_N$) mit einem Absolutvergleichswert vorgesehen ist.

29. Bremsanlage, insbesondere elektrisch gesteuerte Bremsanlage, mit einer Bremsdrucksteuerung unter Verwendung eines Verfahrens nach Anspruch 22 oder 23.

EP 1 312 523 A1

**Europäisches Patentamt**

**EUROPÄISCHER RECHERCHENBERICHT**

Nummer der Anmeldung

EP 02 02 2436

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 198 05 091 A (SIEMENS AG) 19. August 1999 (1999-08-19) * Spalte 3, Zeile 3 - Spalte 4, Zeile 63 * | 1,2,4,5, 22,24, 25,29 | B60T8/00 B60T17/22 |
| Y | --- | 3 | |
| Y | DE 43 32 838 C (DAIMLER BENZ AG ;TELEFUNKEN MICROELECTRON (DE)) 15. Dezember 1994 (1994-12-15) * Spalte 1, Zeile 8 - Spalte 1, Zeile 43 * * Spalte 3, Zeile 18 - Spalte 5, Zeile 27; Abbildung 1 * | 1-8, 10-12, 14-29 | |
| Y | DE 197 26 116 A (WABCO GMBH) 21. Januar 1999 (1999-01-21) * Seite 3, Zeile 1 - Seite 5, Zeile 42 * | 1,2,4-8, 10,12, 14-29 | |
| Y | DE 197 55 112 A (VOLKSWAGENWERK AG) 25. Juni 1998 (1998-06-25) * Spalte 2, Zeile 36 - Spalte 4, Zeile 8 * | 1,3-8, 10,12, 14-29 | RECHERCHIERTE SACHGEBIETE (Int.Cl.7) B60T |
| Y | DE 199 54 807 A (BOSCH GMBH ROBERT) 17. Mai 2001 (2001-05-17) * Spalte 3, Zeile 9 - Spalte 3, Zeile 35 * | 3 | |
| Y | US 4 743 072 A (BREARLEY MALCOLM) 10. Mai 1988 (1988-05-10) * Spalte 3, Zeile 11 - Spalte 5, Zeile 44; Abbildung 3 * | 11 | |
| A | PATENT ABSTRACTS OF JAPAN vol. 2000, no. 24, 11. Mai 2001 (2001-05-11) & JP 2001 206218 A (FUJI HEAVY IND LTD), 31. Juli 2001 (2001-07-31) * Zusammenfassung * | 1-29 | |

Der vorliegende Recherchenbericht wurde für alle Patentansprüche erstellt

| Recherchenort | Abschlußdatum der Recherche | Prüfer |
|---|---|---|
| MÜNCHEN | 17. März 2003 | Marx, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

8

**ANHANG ZUM EUROPÄISCHEN RECHERCHENBERICHT
ÜBER DIE EUROPÄISCHE PATENTANMELDUNG NR.**

EP 02 02 2436

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 19805091 | A | 19-08-1999 | DE | 19805091 A1 | 19-08-1999 |
| | | | FR | 2774640 A1 | 13-08-1999 |
| | | | IT | MI990213 A1 | 04-08-2000 |
| | | | US | 6254203 B1 | 03-07-2001 |
| DE 4332838 | C | 15-12-1994 | DE | 4332838 C1 | 15-12-1994 |
| | | | FR | 2710601 A1 | 07-04-1995 |
| | | | GB | 2282649 A ,B | 12-04-1995 |
| | | | IT | RM940612 A1 | 27-03-1995 |
| | | | SE | 508025 C2 | 10-08-1998 |
| | | | SE | 9403217 A | 28-03-1995 |
| | | | US | 6460943 B1 | 08-10-2002 |
| DE 19726116 | A | 21-01-1999 | DE | 19726116 A1 | 21-01-1999 |
| | | | EP | 0885793 A2 | 23-12-1998 |
| | | | JP | 11034847 A | 09-02-1999 |
| | | | US | 6099085 A | 08-08-2000 |
| DE 19755112 | A | 25-06-1998 | DE | 19755112 A1 | 25-06-1998 |
| DE 19954807 | A | 17-05-2001 | DE | 19954807 A1 | 17-05-2001 |
| | | | JP | 2001182578 A | 06-07-2001 |
| US 4743072 | A | 10-05-1988 | BR | 8602465 A | 27-01-1987 |
| | | | CS | 8603920 A2 | 12-10-1990 |
| | | | DE | 3667944 D1 | 08-02-1990 |
| | | | EP | 0204483 A2 | 10-12-1986 |
| | | | JP | 2059062 C | 10-06-1996 |
| | | | JP | 7090759 B | 04-10-1995 |
| | | | JP | 62031553 A | 10-02-1987 |
| | | | KR | 9003948 B1 | 05-06-1990 |
| | | | SU | 1452474 A3 | 15-01-1989 |
| JP 2001206218 | A | 31-07-2001 | KEINE | | |

EPO FORM P0461